# EUROPÄISCHE PATENTSCHRIFT

(11) **EP 4 513 082 B1**
(45) Veröffentlichungstag und Bekanntmachung des Hinweises auf die Patenterteilung: **05.08.2026**
(21) Anmeldenummer: 25150833.9
(22) Anmeldetag: 14.06.2023
(51) Int. Cl.: F24C 15/00, F25D 27/00, F21V 8/00, F21V 33/00, H05B 6/64, F21W 131/307

(54) **GARGERÄTELEUCHTE**
COOKING APPLIANCE LAMP
LAMPE POUR APPAREILS DE CUISSON

(30) Priorität: 19.09.2022 DE 102022123917
(43) Veröffentlichungstag der Anmeldung: 26.02.2025
(62) Teilanmeldung aus: 23179293.8
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Harnischmacher, Jörg, 58706 Menden (DE)
(74) Vertreter: Ostriga PartGmbB

(56) Entgegenhaltungen:
- EP-A1- 2 366 323
- EP-A1- 2 913 591
- EP-A1- 3 388 747
- EP-A1- 4 033 861
- DE-U1- 202015 104 575

## Beschreibung

Die Erfindung betrifft eine Gargeräteleuchte, mit einer Lichtquelle, die von einer Leiterplatte mit darauf angeordneter LED gebildet ist, mit einem Lichtleitstab, der eine Lichteintrittsfläche für das von der LED emittierte Licht aufweist, mit einem Halter, der auf einer Unterseite eine Leiterplattenaufnahme aufweist und auf einer der Unterseite gegenüberliegenden Oberseite mit einem Fixierelement zur Aufnahme des Lichtleitstabes versehen ist, mit einer Durchbrechung des Halters im Bereich des Fixierelementes, durch welche das emittierte Licht von der auf der Unterseite angeordneten LED zum im oberseitig angeordneten Lichtleitstab gelangt.

Eine gattungsgemäße Leuchte ist in der DE 20 2020 101 157 U1 der Anmelderin gezeigt. Dort wird ein Lichtleitstab in ein als Hülse ausgebildetes Fixierelement eingesetzt. Der Lichtleitstab verfügt an seinem Außenumfang über einen Freischnitt. In diesem Freischnitt greifen, je nach Ausführungsbeispiel unterschiedlich ausgebildete, Sicherungselemente ein und verankern so den Lichtleitstab am Halter. So schlägt die Veröffentlichung beispielsweise Federstecker oder Rastflügel vor, die als Sicherungselemente dienen. Auf diese Weise wird eine formschlüssige Festlegung des Lichtleitstabes innerhalb des Fixierelementes des Halters erreicht.

Die DE 10 2018 111 092 A1 zeigt eine ähnlich aufgebaute Leuchte, bei welcher der Lichtleitstab ebenfalls in einem hülsenförmigen Fixierelement einsitzt. Der Hülsenkörper ist jedoch geschlitzt ausgeführt, so dass seine Wände in Radialrichtung verformbar sind. Der Hülsenkörper ist von einem Klemmring umgeben, welcher die Hülsenwände gegen den Lichtleitstab presst. Auf diese Weise wird ein Reibschluss zwischen Hülsenwand und Lichtleitstab hergestellt, welcher den Lichtleitstab im Fixierelement zu halten in der Lage ist.

Die aus dem Stand der Technik bekannten Befestigungsmöglichkeiten für Lichtleitstäbe im Halter einer Gargeräteleuchte sind durchaus zufriedenstellend, auch wenn in bestimmten Einbausituationen die Formschlussverbindung der Reibschlussverbindung vorzuziehen ist.

In der EP 2 913 591 A1 ist ein Gargerät mit einer Leuchte dargestellt. Um eine spezifische Kühlfunktion der Leuchte zu ermöglichen, ist eine aus mehreren Einzelteilen bestehende Leuchtenhalterung entwickelt worden.

Die DE 20 2015 104 575 U1 zeigt eine einfach aufgebaute Haushaltsgeräteleuchte. Der dort vorgeschlagene Halter verrastet eine Leiterplatte und nimmt entgegen der Lichtaustrittsrichtung eines Leuchtmittels einen Lichtleitstab auf.

In EP 3 388 747 A1 ist ein Lichtleiter dargestellt, der eine Abdeckung für eine Öffnung einer Garraumwand integriert und in einem bestimmten Winkel zur Abdeckung ausgerichtet ist.

EP 4 033 861 A1 zeigt eine Gargeräteleuchte, bei welcher der Lichtleitstab mit einer Umfangsnut versehen ist. Von einem Ringkragen ausgebildete Rastlaschen greifen in die Umfangsnut ein, um den Lichtleitstab zu verankern.

Schließlich ist aus der gattungsfremden EP 2 366 323 A1 die Geräteleuchte eines Geschirrspülers bekannt. Bei dieser Wird ein Abdeckglas entgegen der Lichtaustrittrichtung eines Leuchtmittels im Halter montiert.

Hinsichtlich der Montagefreundlichkeit wird jedoch ein Verbesserungsbedarf gesehen. Daher ist es Aufgabe der Erfindung, eine gattungsgemäße Leuchte mit einer alternativen Lichtstabbefestigung bereitzustellen.

Gelöst wird die Aufgabe der Erfindung zunächst von einer Leuchte mit den Merkmalen des Anspruches 1.

Der wesentliche Vorteil der Erfindung liegt zunächst darin, dass der Lichtstab formschlüssig im Fixierelement des Halters festgelegt ist. Auf diese Weise ist ein Herausrutschen des Lichtleitstabes aus dem Halter bei Transport oder Montage der Leuchte sicher ausgeschlossen. Der für die Formschlussverbindung genutzte Umfangsvorsprung, der sich in Radialrichtung von der Längsachse des Lichtleitstabes nach außen hin erstreckt, hat gegenüber den Formschlussverbindungen im Stand der Technik einen erheblichen Vorteil, was die Lichtverluste innerhalb des Lichtleitstabes anbelangt. Ein Umfangsfreischnitt, so er nicht unter Berücksichtigung des Lichtaustrittswinkels der LED und des Abstandes zur Lichtaustrittsebene der LED in den Lichtstab eingebracht ist, verringert den für die Lichtleitung zur Verfügung stehenden Querschnitt und fügt im Zweifelsfall Lichtaustrittsflächen in den Lichtleitstab ein. Über diese Lichtaustrittsflächen, die im Bereich des Fixierelementes des Halters angeordnet sind, tritt in den Lichtleitstab eingespeistes Licht aus, was zu einem gewissen Lichtverlust führt.

Die formschlüssige Festlegung des Lichtleitstabes durch einen Umfangsvorsprung gibt dem Konstrukteur einer gattungsgemäßen Leuchte somit größere Freiheiten, die mechanische Festlegung des Lichtleitstabes im Halter zu realisieren, ohne sich über eventuelle Lichtverluste durch aus dem Stand der Technik bekannte Umfangsfreischnitte Gedanken machen zu müssen oder ohne sich um das Einhalten bestimmter Abstände zwischen Lichtaustrittsebene der LED und Umfangsfreischnitt unter Berücksichtigung des Lichtaustrittswinkels der LED berücksichtigen zu müssen.

Der Umfangsvorsprung kann zusätzlich zur mechanischen Befestigung des Lichtleitstabes im Halter auch dazu genutzt werden, den Lichtleitstab in einer definierten Ausrichtung im Halter zu positionieren. Dies ist insbesondere dann möglich, wenn der Umfangsvorsprung lediglich entlang eines Teils einer Umfanglinie ausgebildet ist und das Fixierelement des Halters eine korrespondierende, den Umfangsvorsprung aufnehmende Ausnehmung aufweist. So ist gewährleistet, dass der Umfangsvorsprung in lediglich einer Relativausrichtung zum Halter in das Fixierelement eingesetzt und dort festgelegt werden kann.

Bei einer besonders bevorzugten Ausführungsform ist jedoch vorgesehen, dass der Umfangsvorsprung ein im Wesentlichen umlaufender Flansch am der Lichteintrittsfläche des Lichtleitstabes gelegenen Ende des Lichtleitstabes ist.

Diese Ausführungsform hat den erheblichen Vorteil, dass der Lichtleitstab zumindest hinsichtlich seines als Flansch ausgebildeten Befestigungsorgans rotationssymmetrisch ausgebildet ist, was die Herstellung des Lichtleitstabes erheblich vereinfacht.

Die Anordnung des Flansches an demjenigen Ende des Lichtleitstabes, der die Lichteintrittsfläche ausbildet, vergrößert die Lichteintrittsfläche um das Maß der Flanschbreite. Auf diese Weise lässt sich bei entsprechender Ausgestaltung der LED mehr Licht in den Lichtleitstab einspeisen.

Insbesondere wenn der in Lichtaustrittsrichtung gelegene Übergang zwischen Flansch und Lichtleitstab optisch korrekt ausgeführt wird, ist eine Totalreflektion des Lichtes auch im Übergangsbereich gewährleistet, so dass ein Lichtaustritt im Übergangsbereich durch die vergrößerte Lichteinspeisefläche des Lichtleitstabes sicher vermieden wird.

Ein Flansch hat darüber hinaus den Vorteil, dass die Ausrichtung des Lichtleitstabes bei der Montage im Fixierelement des Halters aufgrund der Rotationssymmetrie unerheblich ist und die Montage wesentlich vereinfacht ist.

Es ist vorgesehen, dass das Fixierelement des Halters ein hohlzylindrisches Bauteil mit einer Zylinderwand ist, die in einer Radialebene eine innenumfängliche Ausnehmung, insbesondere eine wenigstens als Ringnutabschnitt ausgebildete Ausnehmung aufweist, in welcher der Umfangsvorsprung des Lichtleitstabes formschlüssig einsitzt, insbesondere wenn die innenumfängliche Ausnehmung, insbesondere in Form wenigstens eines Ringnutabschnittes an dem dem Halter nahen Ende der Zylinderwand ausgebildet ist.

Durch diese Erfindungsmerkmale ist sichergestellt, dass eine zum Umfangsvorsprung bzw. Flansch passende Komplementärstruktur im Fixierelement vorhanden ist. Diese nimmt den erfindungsgemäßen Erfindungsvorsprung, im Zweifel den Flansch, auf. Hierdurch wird in Lichtaustrittsrichtung eine zugfeste Formschlussverbindung geschaffen, die den Lichtleitstab sicher im Halter der Leuchte hält.

Sodann ist vorgesehen, dass ein Sicherungselement den Lichtleitstab in der Zylinderwand des Fixierelementes hält.

Das Sicherungselement ist dafür zuständig, den entlang einer Montagerichtung in das Fixierelement eingesetzten Lichtleitstab gegen eine entsprechende Gegenbewegung zu sichern und somit den Lichtleitstab im Fixierelement zu halten.

Bei der Erfindung wird der Lichtleitstab entlang der Lichtaustrittsrichtung durch die Durchbrechung des Halters in das Fixierelement eingeschoben. Es ist dann ausreichend, wenn die Leiterplatte an dem Halter montiert wird. Diese verhindert ein Rückrutschen des Lichtleitstabes entgegen seiner Montagerichtung. Insoweit kann man hier die Leiterplatte als Sicherungselement für den Lichtleitstab ansehen.

Um eine direkte Kontaktierung zwischen Lichtleitstab und Leiterplatte zu verhindern und/oder Fertigungstoleranzen auszugleichen und/oder einen festen Sitz des Lichtleitstabes insbesondere in Lichtaustrittsrichtung im Fixierelement zu gewährleisten, sollte ein Distanzelement zwischen Leiterplatte und Lichtleitstab eingefügt werden. Dieses Distanzelement kann in seiner Form und Ausprägung vielfältig sein. Besonders bewährt hat sich ersten Versuchen nach ein Elastomerring, welcher nach der Montage der Leiterplatte zumindest minimal gestaucht ist und so eine in Lichtaustrittsrichtung wirkende Druckkraft auf den im Fixierelement gehaltenen Lichtleitstab aufbringt.

Es ist jedoch auch denkbar, die Leiterplatte bei ihrer Konfektionierung mit Distanzelementen zu versehen, die bevorzugt elastische Eigenschaften haben. Man kann hier beispielsweise an die Verwendung des Silikonmaterials denken, mit welchem die auf der Leiterplatte montierten LEDs überzogen werden.

In einer alternativen Ausführungsform der Erfindung ist vorgesehen, dass aus einem Wandabschnitt eine Rastzunge freigeschnitten ist, deren durchbrechungsnahes Ende rückstellelastisch radial ausfedert und in welcher der Flansch des Lichtleitstabes verrastet.

Auch bei dieser Ausführungsform wird der Lichtleitstab durch die Durchbrechung des Halters in das Fixierelement in Lichtaustrittsrichtung eingeschoben. Die Rastzunge des Wandabschnittes hintergreift jedoch den Umfangsvorsprung bzw. Flansch des Lichtleitstabes und sichert diesen so gegen ein Herausrutschen entgegen der Montagerichtung. Selbstverständlich kann auch diese Ausführungsform zusätzlich ein Distanzelement zwischen Leiterplatte und Lichteintrittsfläche des Lichtleitstabes angeordnet werden. Alternativ ist es denkbar, ein Ausfedern der Rastzunge in Richtung weg von der Längsachse des Lichtleitstabes durch das Aufbringen eines Sicherungsringes auf dem Außenumfang der Zylinderwand des Fixierelementes zu verhindern und so eine zusätzliche Sicherung des Lichtleitstabes zu gewährleisten.

Weitere Vorteile der Erfindung sowie ein besseres Verständnis derselben folgt aus der Beschreibung verschiedener Ausführungsbeispiele der Erfindung. Es zeigen:
- Figur 1: eine erste, nicht erfindungsgemäße Ausführungsform einer Gargeräteleuchte in einer ersten Explosionsansicht,
- Figur 2: die Ausführungsform gemäß Figur 1 in einer zweiten Explosionsansicht,
- Figur 3: eine Ansicht von oben auf den Halter der Ausführungsform nach Figur 1,
- Figur 4a: eine Darstellung von Lichtleitstab und Halter der Ausführungsform nach Figur 1 in Vormontagestellung,
- Figur 4b: die Ansicht gemäß Figur 4a in einem Längsschnitt,
- Figur 5a: eine Ansicht von Lichtleitstab und Halter gemäß Ausführungsform nach Figur 1 in Montagestellung,
- Figur 5b: eine Schnittdarstellung der Figur 5a,
- Figur 6: ein erster Vertikalschnitt durch die Ausführungsform gemäß Figur 1,
- Figur 7: ein zweiter Vertikalschnitt durch die Ausführungsform gemäß Figur 1,
- Figur 8: eine zweite, nicht erfindungsgemäße Ausführungsform einer Gargeräteleuchte in Explosionsdarstellung,
- Figur 9: eine Aufsicht auf den Halter der Ausführungsform nach Figur 8,
- Figur 10a: eine Darstellung von Halter und Lichtleitstab der zweiten Ausführungsform nach Figur 8 in Vormontagestellung,
- Figur 10b: die Darstellung nach Figur 10a im Längsschnitt,
- Figur 11a: die Darstellung von Halter und Lichtleitstab der zweiten Ausführungsform nach Figur 8 in Montagestellung,
- Figur 11b: die Darstellung nach Figur 11a in einem Vertikalschnitt,
- Figur 12: eine Ansicht von oben auf den Halter mit eingesetztem Lichtleitstab gemäß Ausführungsform 2 nach Figur 8,
- Figur 13: eine dritte, als erfindungsgemäßes Beispiel dienende Ausführungsform in Explosionsansicht
- Figur 14: die dritte Ausführungsform gemäß Figur 13 in einer zweiten Explosionsdarstellung,
- Figur 15: die dritte Ausführungsform in einem ersten Vertikalschnitt,
- Figur 16: die dritte Ausführungsform in einem zweiten Vertikalschnitt,
- Figur 17: eine vierte, als erfindungsgemäßes Beispiel dienende Ausführungsform in Explosionsdarstellung,
- Figur 18: die vierte Ausführungsform in einer zweiten Explosionsansicht,
- Figur 19: die vierte Ausführungsform in einer ersten vertikalen Schnittansicht,
- Figur 20: die vierte Ausführungsform in einer zweiten vertikalen Schnittansicht.

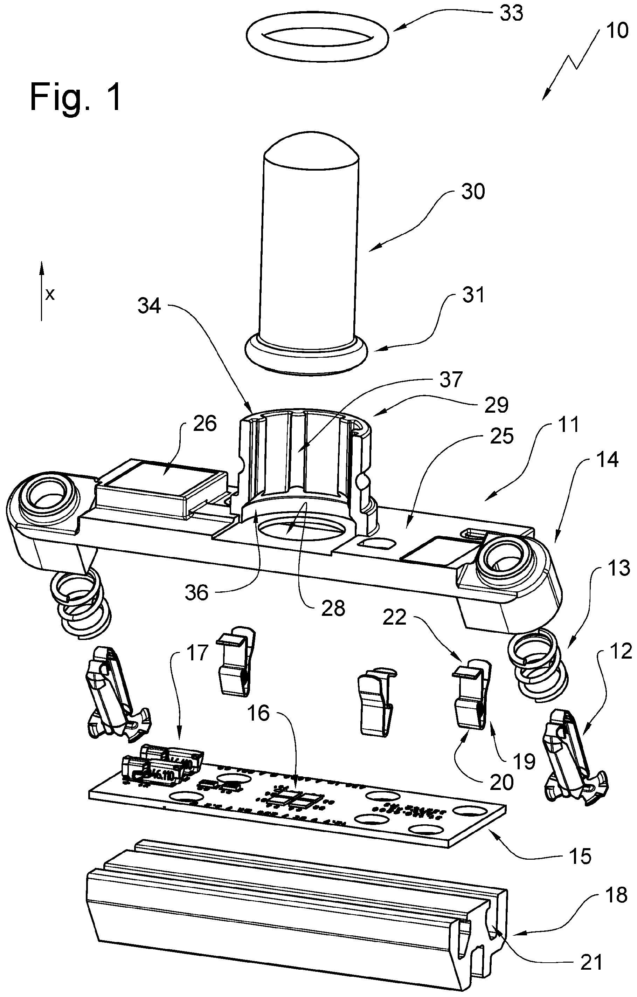

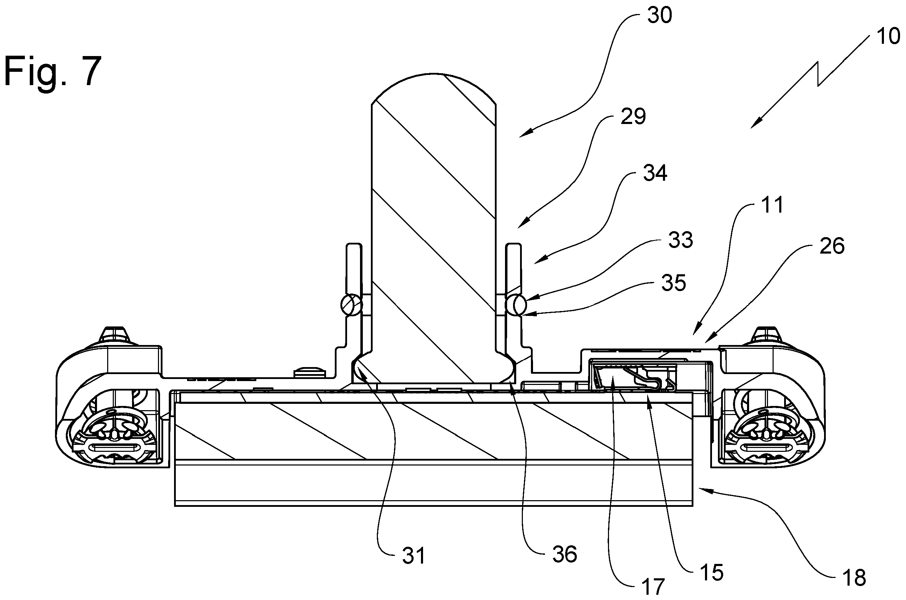

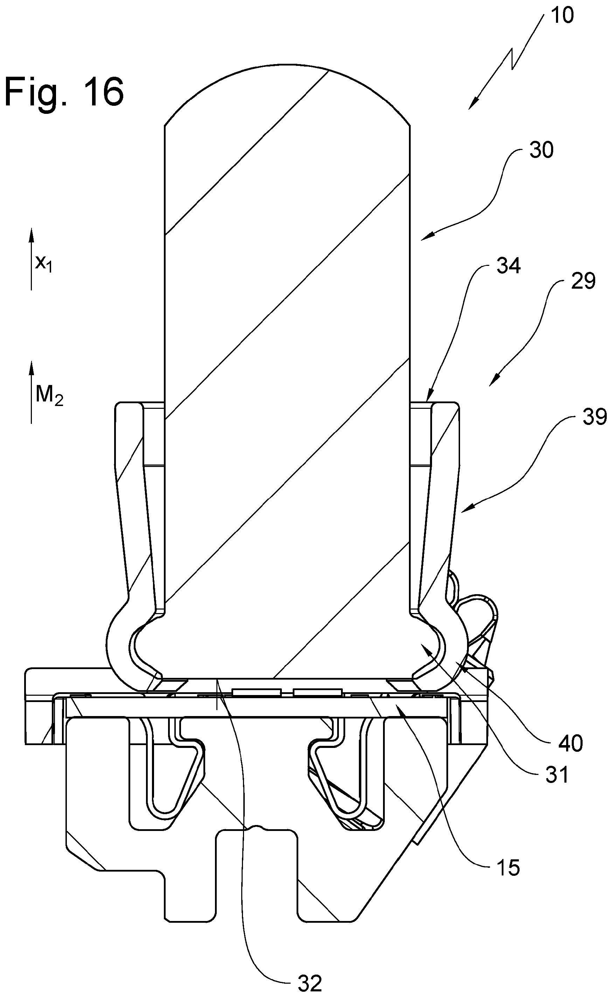

Im Folgenden wird die Erfindung anhand von vier Ausführungsbeispielen, dargestellt in den Figuren 1 - 20, detailliert beschrieben.

Die Ausführungsbeispiele zeigen eine hohe strukturelle Übereinstimmung, so dass für identische oder gleich wirkende Bauteile gleiche Begriffe und Bezugszeichen verwendet wurden.

In den Figuren ist eine Leuchte gemäß der Erfindung insgesamt mit der Bezugsziffer 10 versehen. Eine erste, nicht erfindungsgemäße Ausführungsform Leuchte 10 ist in den Figuren 1 bis 8 dargestellt.

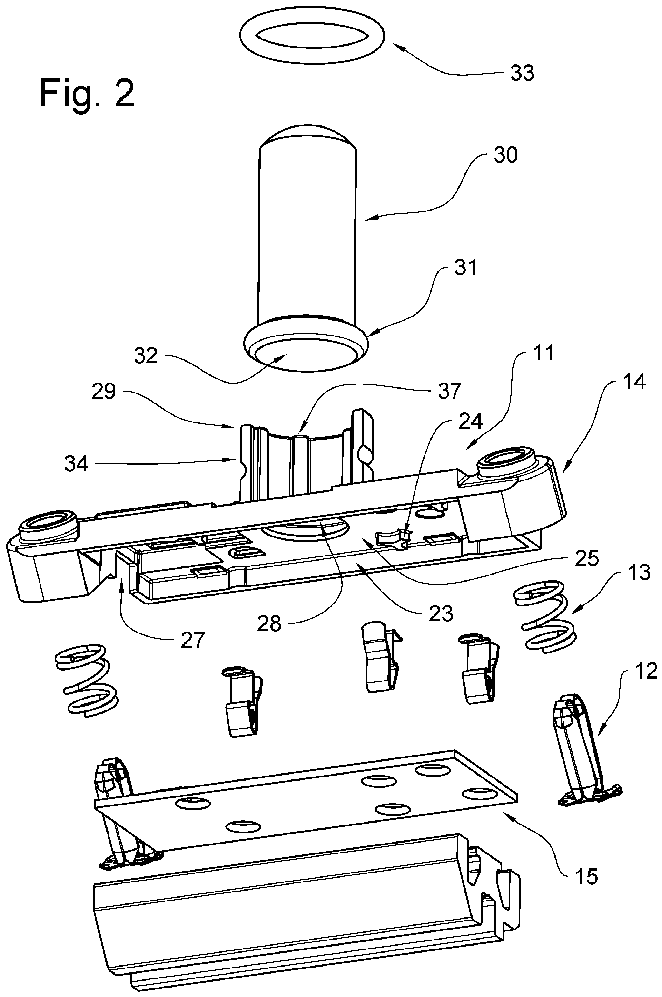

Die allgemeine und für alle Ausführungsformen geltende Beschreibung ergibt sich im Wesentlichen aus den folgenden Ausführungen zu den Figuren 1 und 2.

Die Leuchte 10 umfasst zunächst einen Halter 11. Dieser dient dazu, alle Einzelteile der Leuchte 10 untereinander zu verbinden und zueinander auszurichten. Darüber hinaus dient der Halter 11 bei den Ausführungsformen der Erfindung auch dazu, die Leuchte 10 an einem nicht weiter dargestellten Stützteil eines Haushaltsgerätes, insbesondere eines Gargerätes, anzuordnen. Hierzu dienen Steckbolzen 12, die durch Schraubenfedern 13 hindurch in Bolzenaufnahmen 14 eingesteckt werden. Das nicht dargestellte Stützbauteil verfügt über Lochungen, durch die die Steckbolzen 12 hindurchschiebbar sind. Die Schraubenfedern 13 werden bei der Montage der Leuchte 10 am Stützbauteil mit einer Federvorspannung beaufschlagt. Die Federkräfte erlauben einerseits den Ausgleich von Maßtoleranzen und andererseits den Ausgleich von Materialausdehnungen durch Temperatureinflüsse insbesondere bei Gargeräten wie Backöfen. Sie gewährleisten also einen sicheren und rüttelfreien Sitz der Leuchte 10 an einem Stützbauteil eines Gerätes.

Eine Leiterplatte 15 verfügt über wenigstens eine LED 16, welche als Lichtquelle dient und aus welcher Licht in Lichtaustrittsrichtung X emittiert wird. Anschlussklemmen 17, welche auf der Leiterplatte 15 aufgelötet sind, dienen der elektrischen Anbindung der Leiterplatte 15 an eine Energiequelle über einsteckbare, nicht dargestellte Anschlussleiter.

Die Leiterplatte 15 wird auf einem Gegenlager 18, insbesondere ausgebildet als Kühlkörper, aufgesetzt. Hierzu dienen Rastfederelemente 19, deren Fuß 20 in einer Befestigungsnut 21 des Gegenlagers einsitzt und deren Haltearme 22 auf der dem Gegenlager 18 abgewandten Oberseite der Leiterplatte 15 aufliegen und diese gegen das Gegenlager drücken.

Der Halter 11 bildet auf seiner dem Gegenlager 18 zugewandten Unterseite eine Leiterplattenaufnahme 23 aus (siehe insbesondere Figur 2). Diese kann mit zum Gegenlager 18 vorspringen Distanzstücken 24 versehen sein. Diese schaffen einen Raum zwischen der Deckwand 25 des Halters 11 und der Platinen Oberfläche, der für auf der Platine aufsitzende Elektronikbauteile, wie die LED 16 oder Steuerchips nutzbar ist. Darüber hinaus kann durch den so entstehenden Luftraum ein Kühlluftstrom geführt werden, um eine für den LED-Betrieb zweckmäßige Wärmeabfuhr zu gewährleisten.

Die als Distanzstücke 24 bezeichneten Dorne könnten auch als Lagerkodierung für die Leiterplatte 15 dienen. Hierzu greifen die Dorne in korrespondierende Ausnehmungen der Leiterplatte 15 ein.

Für die Anschlussklemmen 17 bildet die Deckwand 25 des Halters 13 eine Aufnahmekuppel 26 aus, die seitlich nach außen hin mit einem Leitereinführdurchbruch 27 versehen ist.

Der Halter 11 verfügt in seiner Deckwand 25 über eine Durchbrechung 28, die in Lichtaustrittsrichtung X oberhalb der LED 16 liegt. Das von der LED emittierte Licht tritt durch die Durchbrechung 28 der Deckwand 25 aus dem Halter 11 aus.

Zentraler Bestandteil des Halters 11 ist ein hohlzylindrisches bis hülsenartiges Fixierelement 29, welches einen Lichtleitstab 30 formschlüssig am Halter 11 anordnet. Die vier beschriebenen Ausführungsformen unterscheiden sich im Wesentlichen durch die Ausgestaltung dieses Fixierelementes 29, auf welches später detailliert eingegangen wird.

Der Lichtleitstab 30 ist ein zylindrisches Bauteil und im Ausführungsbeispiel kreiszylindrisch ausgeführt. Abweichende Querschnittsformen sind jedoch in jeder Hinsicht möglich, ohne hierdurch die Erfindungsprinzipien zu verlassen.

Der Lichtleitstab 30 ist mit einem Umfangsvorsprung versehen. Das heißt, das Lichtleitstabmaterial ist in Radialrichtung von der Längsachse des Lichtleitstabes 30 wegweisend aus der Umfangsfläche ausgestellt. In den Ausführungsformen ist dieser Umfangsvorsprung grundsätzlich als ein umlaufender Flansch 31 dargestellt, der sich am der Leiterplatte 15 naheliegenden Ende des Lichtleitstabes 30 befindet. Anders ausgedrückt befindet sich der Flansch 31 an demjenigen Ende des Lichtleitstabes 30, welcher eine Lichteintrittsfläche 32 des Lichtleitstabes bildet.

Zur Sicherung des Lichtleitstabes 30 in Fixierelement 29 der ersten Ausführungsform der Erfindung gemäß den Figuren 1 bis 8 ist noch ein Sicherungsring 33 vorgesehen, dessen Funktion ebenfalls im Folgenden beschrieben wird.

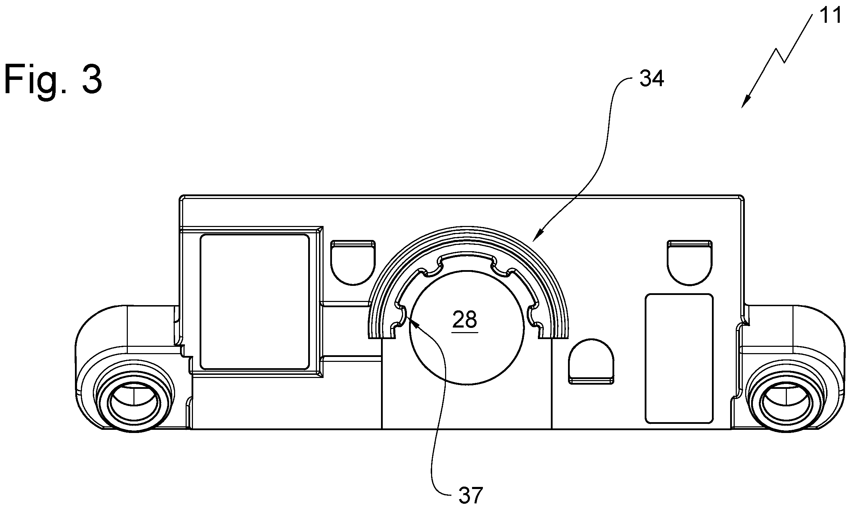

Wie in Zusammenschau der Figuren 1 bis 3 zur nicht erfindungsgemäßen ersten Ausführungsform ersichtlich ist, verfügt das hohlzylindrische Fixierelement 29 der ersten Ausführungsform über eine den Hohlzylinder bildende Zylinderwand 34. Diese verfügt in ihrer Außenoberfläche über eine Sicherungsringnut 35. Die Zylinderwand 34 entspringt der Deckwand 25 des Halters 11 in Lichtaustrittsrichtung X und umgibt die Durchbrechung 28. Die Innenumfangsfläche der Zylinderwand 34 verfügt an ihrem der Deckwand 25 nahen Ende über einen Ringnutabschnitt 36, der sich vollständig entlang des Innenumfangs der Zylinderwand 34 erstreckt. Die Figuren 1 und 2, insbesondere aber auch die Aufsicht auf den Halter gemäß Figur 3 zeigt, dass die Zylinderwand 34 sich lediglich über einen Umfangswinkel von 180° um die Durchbrechung 28 herum erstreckt. Das hohlzylindrische Fixierelement 29 gemäß der ersten Ausführungsform ist also nach Art eines vertikal geschnittenen Halbzylinders ausgebildet. Darüber hinaus ist den Zeichnungen zu entnehmen, dass die Innenumfangsfläche der Zylinderwand mit Zentrierstegen 37 versehen ist, um den Lichtleitstab in Vertikalrichtung zentriert in Fixierelement 29 zu halten.

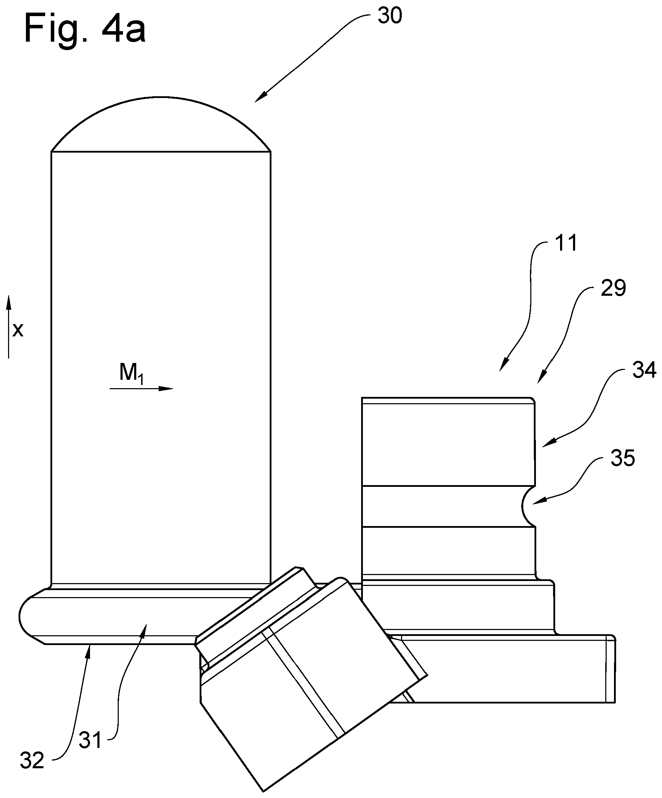

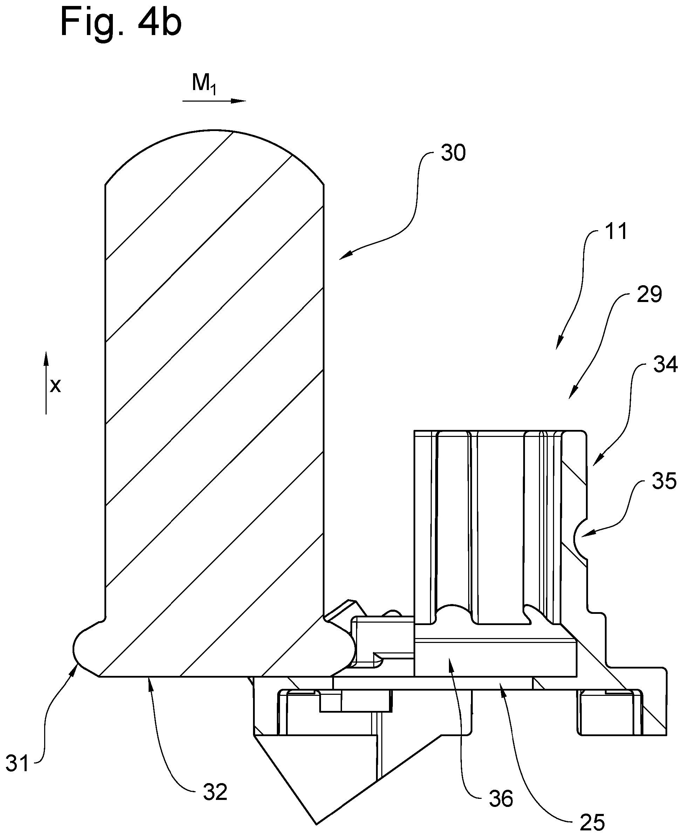

Figur 4a zeigt einerseits den Halter 11, andererseits den Lichtleitstab 30 in Seitenansicht und Vormontagestellung. Hierbei ist der Lichtleitstab 30 mit seiner Lichteintrittsfläche 32 auf Höhe der Oberseite der Deckwand 25 des Halters 11 positioniert und befindet sich neben der durch die Zylinderwand 34 nicht begrenzten Zylinderwandöffnung. Figur 4b zeigt den Sachverhalt gemäß Figur 4a in Schnittansicht. Dieser Schnittansicht ist zu entnehmen, dass der Flansch 31 des Lichtleitstabes 30 auf Höhe des Ringnutabschnitts 36 der Zylinderwand 34 angeordnet ist. Dargestellt ist über einen Pfeil darüber hinaus die Montagerichtung M1, entlang derer der Lichtleitstab 30 durch die Zylinderwandöffnung in das Fixierelement 29 eingeschoben wird. Dabei greift der Flansch 31 in den Ringnutabschnitt 36 ein. Auf diese Weise ist der Lichtleitstab 30 in Lichtaustrittsrichtung X formschlüssig in der Zylinderwand 34 des Fixierelementes 29 gehalten.

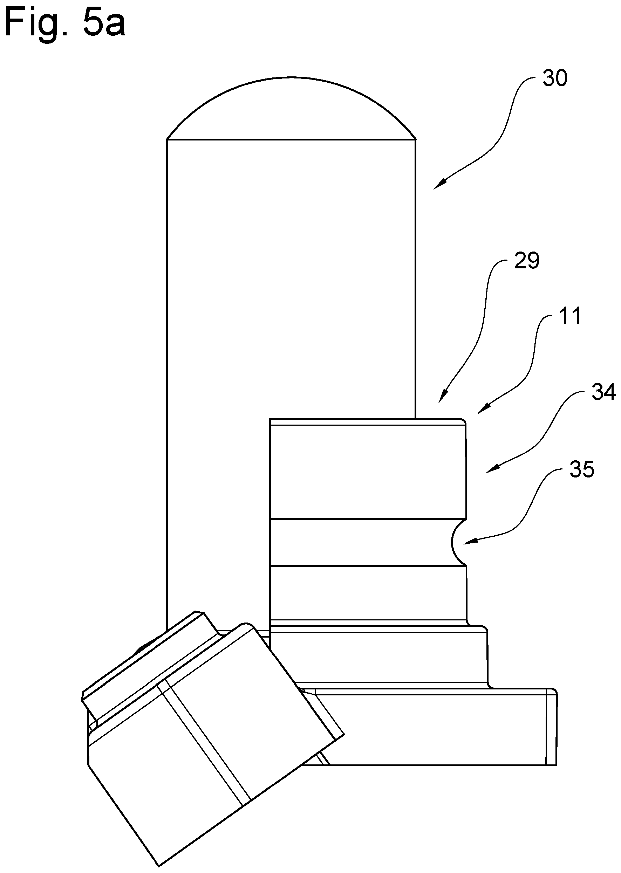

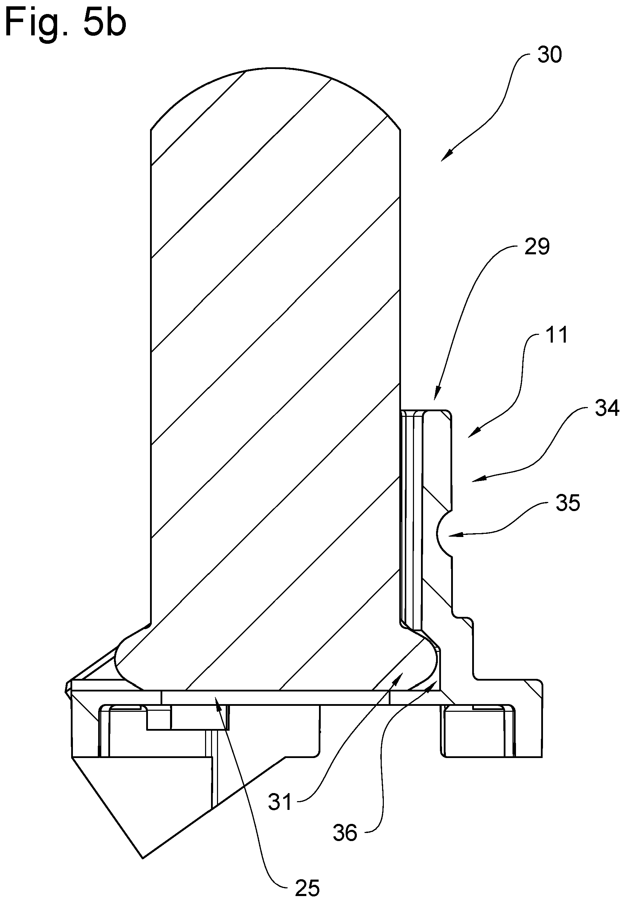

Die Montagestellung von Halter 11 und Lichtleitstab 30 in Seitenansicht ist in Figur 5a und in einer entsprechenden Schnittdarstellung in Figur 5b gezeigt. Man kann anhand der Figur 5a zunächst erkennen, dass die Zylinderwand 34 aufgrund ihres 180° Umfangswinkels den Lichtleitstab entlang seines hälftigen Umfangs umfängt. Figur 5b zeigt den Eingriff des Flansches 31 des Lichtleitstabes 30 in den Ringnutabschnitt 36 der Zylinderwand 34.

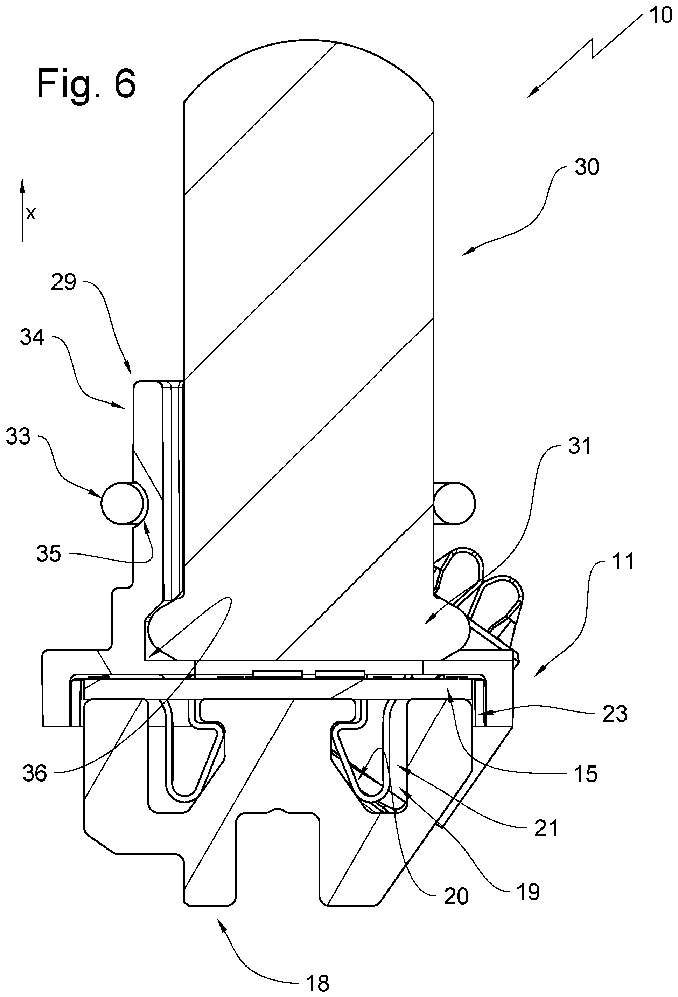

Figur 6 zeigt nunmehr eine seitliche Schnittansicht durch die komplette Leuchte 10. Hier ist zunächst zu entnehmen, wie die Leiterplatte 15 innerhalb der Leiterplattenaufnahme 23 des Halters 11 einsitzt und wie die Rastfederelemente 19 mit ihrem jeweiligen Fuß 20 in der Befestigungsnut 21 des als Kühlkörper ausgebildeten Gegenlagers 18 verankert sind. Der Lichtleitstab 30 sitzt entsprechend den Figuren 5a und 5b im Fixierelement 29 ein, wobei der Flansch 31 des Lichtleitstabes 30 in dem Ringnutabschnitt 36 der Zylinderwand 34 zur Einlage kommt.

Der Sicherungsring 33 ist entgegen der Lichtaustrittsrichtung X auf den Lichtleitstab 30 aufgeschoben und außenumfänglich um die Zylinderwand herumgelegt worden. Dabei sitzt der Sicherungsring 33 in der außenumfänglichen Sicherungsringnut 35 der Zylinderwand 34 ein.

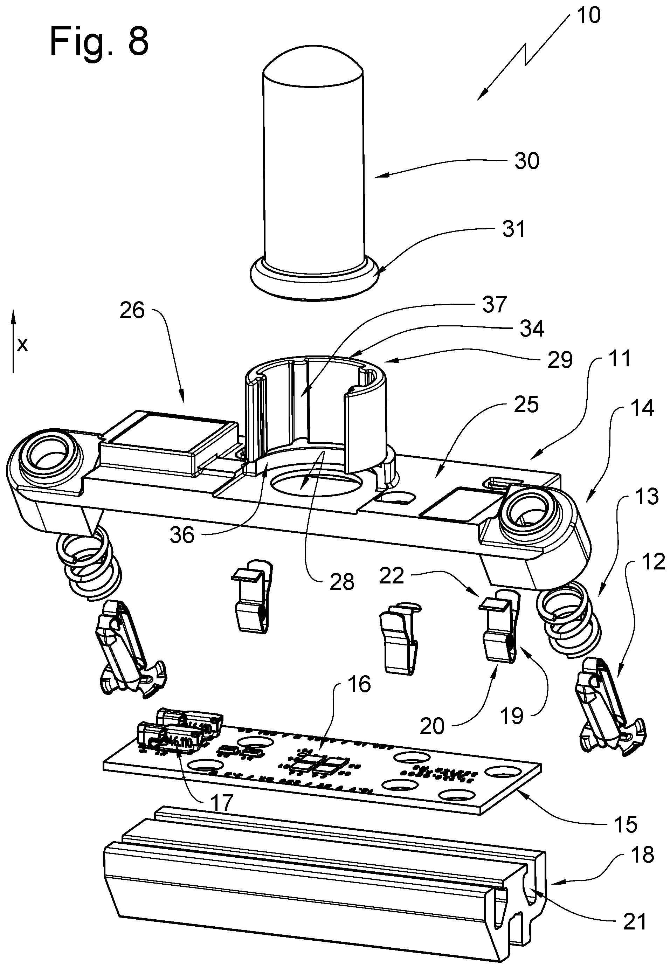

Figur 8 zeigt einen Querschnitt der Frontalansicht der Leuchte 10 nach erstem Ausführungsbeispiel, welche den gegen zu Figur 6 beschriebenen Sachverhalt in einer entsprechend abweichenden Ansicht zeigt. Diese Ansicht zeigt jedoch auch, wie die Anschlussklemmen 17 unterhalb der Aufnahmekuppel 26 des Halters 11 einsitzen.

In den Figuren 8 bis 12 ist eine zweite, nicht beanspruchte Ausführungsform gezeigt, die in Aufbau und Struktur mit der ersten Ausführungsform große Übereinstimmung hat. Dies ist ohne weiteres an der Explosionsdarstellung in Figur 8 ersichtlich. Insoweit gilt für die zweite Ausführungsform zunächst die allgemeine Beschreibung, die insbesondere zu den Figuren 1 und 2 vorgenommen wurde.

Auch hier dient der Halter 11 als zentrales Bauteil, an welchem die Einzelteile der Leuchte 10 zusammengefasst werden. Von der Unterseite her wird die Leiterplatte 15 mit dem als Kühlkörper ausgebildeten Gegenlager 18 an den Halter 11 angesetzt. Der Halter 11 verfügt an seiner Oberseite über ein Fixierelement 29, welches sich in Lichtaustrittsrichtung erstreckt und ein im Wesentlichen hohlzylindrisches Bauteil mit einer Zylinderwand 34 ist, welche in einer Durchbrechung 28 in der Deckwand 25 des Halters 11 durchbricht. Die Durchbrechung 28 erlaubt es, von der LED 16 emittiertes Licht in einen Lichtleitstab 30 einzuspeisen.

Der Lichtleitstab 30 ist ebenfalls analog zum ersten Ausführungsbauteil hier als kreiszylindrischer Stab mit einem Umfangsflansch 31 ausgebildet, wobei - wie im Ausführungsbeispiel 1 beschrieben - hier auch Abweichungen im Querschnitt sowie Alternativstrukturen zum Flansch 31 möglich sind.

Auffällig ist, dass das zweite Ausführungsbeispiel, wie in Figur 8 dargestellt, ohne Sicherungsring 33 auskommt und dass das Fixierelement 29 eine abweichende Ausgestaltung hat.

Auch bei der nicht erfindungsgemäßen zweiten Ausführungsform ist das Fixierelement 29 zunächst durch eine Zylinderwand 34 gebildet, die über einen Umfangswinkel von etwa 180° fest mit der Deckwand 25 des Halters 11 verbunden ist und an ihrem der Deckwand 25 nahen Ende einen Ringnutabschnitt 36 zur Aufnahme des Flansches 31 des Lichtleitstabes 30 ausbildet. Auch hier verfügt die Zylinderwand 34 über Zentrierstege 37.

Aus dem Umfangswinkel von 180° der Zylinderwand folgt, dass auch bei dieser Ausführungsform das Fixierelement einen sich in etwa ebenfalls über einem Umfangswinkel von 180° erstreckenden Umfangsfreischnitt bzw. über eine Umfangsöffnung verfügt. Die in Umfangsrichtung liegenden Enden der Zylinderwand 34 bilden jeweils einen Sicherungsflügel 38 aus. Dieser ist rückstellelastisch und ohne Anbindung an die Deckwand 25 ausgebildet. Jeder Sicherungsflügel 38 ist insofern gegenüber der Deckwand 25 radial beweglich. Die Sicherungsflügel 38 sind im Ausführungsbeispiel 2 materialeinheitlich-stoffschlüssig mit der Zylinderwand 34 ausgebildet und greifen in den Umfangsfreischnitt bzw. die Umfangsöffnung der Zylinderwand 34 ein. Auf diese Weise wird der Umfangsfreischnitt der Zylinderwand 34 verengt.

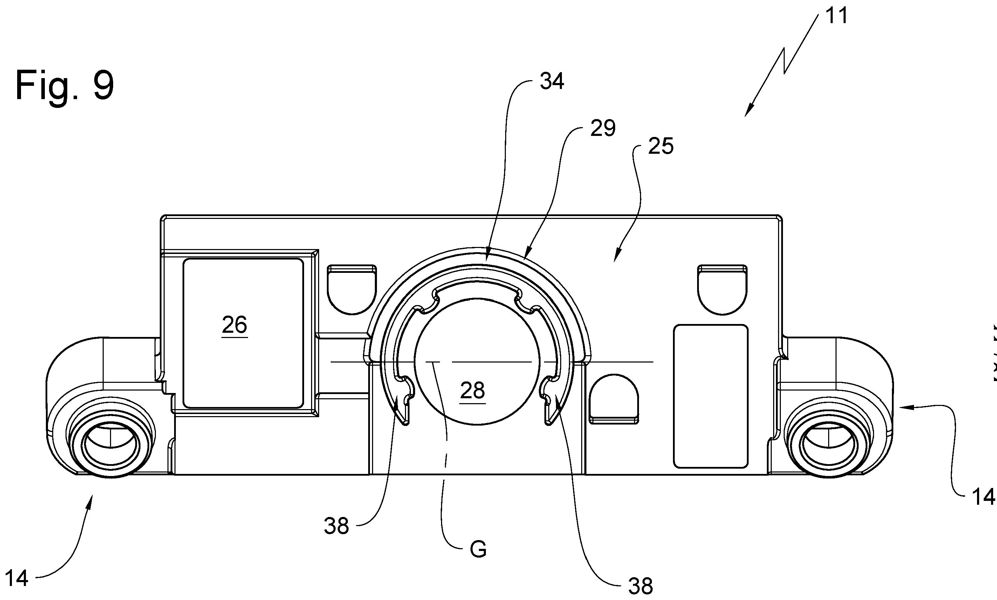

Dieser Sachverhalt ist noch einmal in der Ansicht von oben auf den Halter 11 nach Figur 9 dargestellt. Diese zeigt, wie die Zylinderwand 34 des Fixierelementes 29 die Durchbrechung 28 für den Lichtdurchtritt in einem Umfangswinkel von etwa 180° bis zur gestrichelt dargestellten Grenzlinie G umgibt, wobei jenseits der Grenzlinie die Umfangsöffnung bzw. der Umfangsfreischnitt der Zylinderwand 34 des Fixierelementes 29 liegt. Die Sicherungsflügel 38 schließen sich jeweils an die Zylinderwand 34 an und greifen in den Umfangsfreischnitt ein, so dass dieser verengt ist.

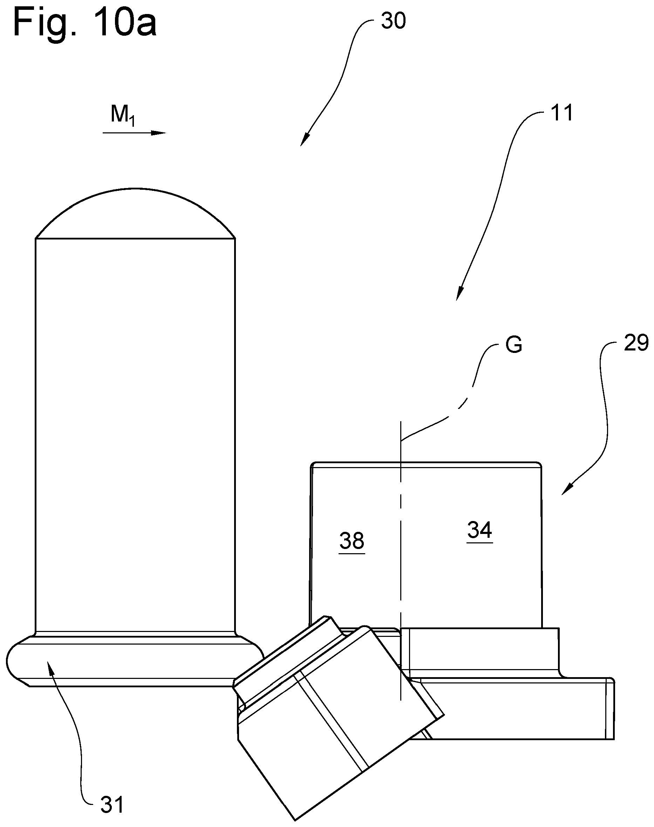

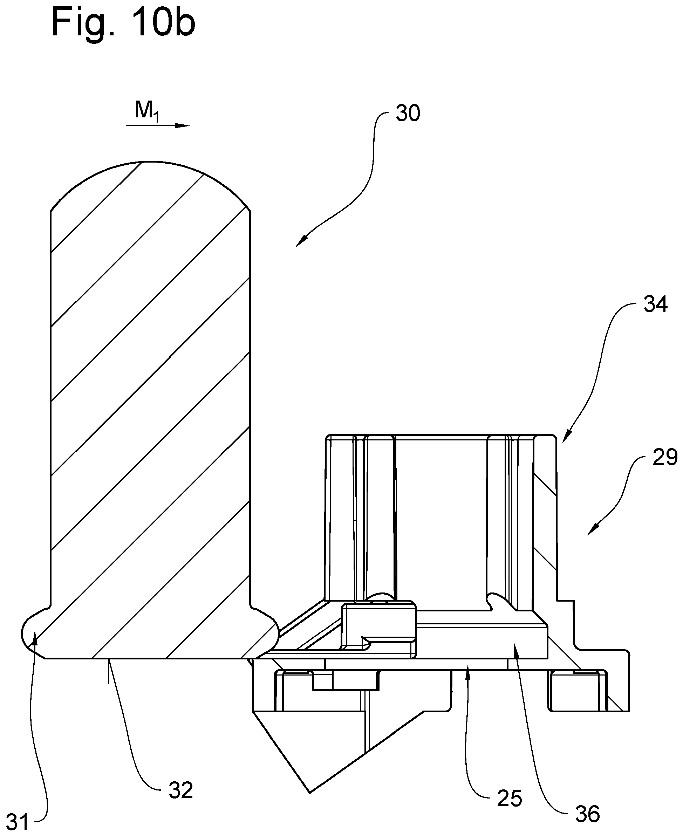

Die Figuren 10a und 10b zeigen den Halter 11 und den Lichtleitstab 30 in Vormontagestellung, wobei Figur 10b ein Vertikalschnitt nach Figur 10a ist. Wie auch beim ersten Ausführungsbeispiel, befindet sich in der Vormontagestellung die Lichteintrittsfläche 32 des Lichtleitstabes 30 auf Höhe der Oberfläche der Deckwand 25 seitlich der Umfangsöffnung der Zylinderwand 34 des Fixierelementes 29. Der Flansch 31 ist zum Ringnutabschnitt 36 ausgerichtet, so dass ein Einschieben des Lichtleitstabes 30 in Montagerichtung M1 zu einem Eintauchen des Flansches 30 in den Ringnutabschnitt 36 führt. Der Lichtleitstab 30 passiert hierbei den Umfangsfreischnitt bzw. die Umfangsöffnung der Zylinderwand 34, wobei die in Figur 10a dargestellten Sicherungsflügel 38 radial nach außen gespreizt werden.

Nach dem Durchtritt des Lichtleitstabes 30 durch den Umfangsfreischnitt der Zylinderwand 34 legen sich die Sicherungsflügel 38 aufgrund ihrer Rückstellelastizität an den Außenumfang des Lichtleitstabes 30 an und verengen somit die Umfangsöffnung. Hierdurch wird ein Herausrutschen des Lichtleitstabes 30 gegen die Montagerichtung M1 sicher verhindert.

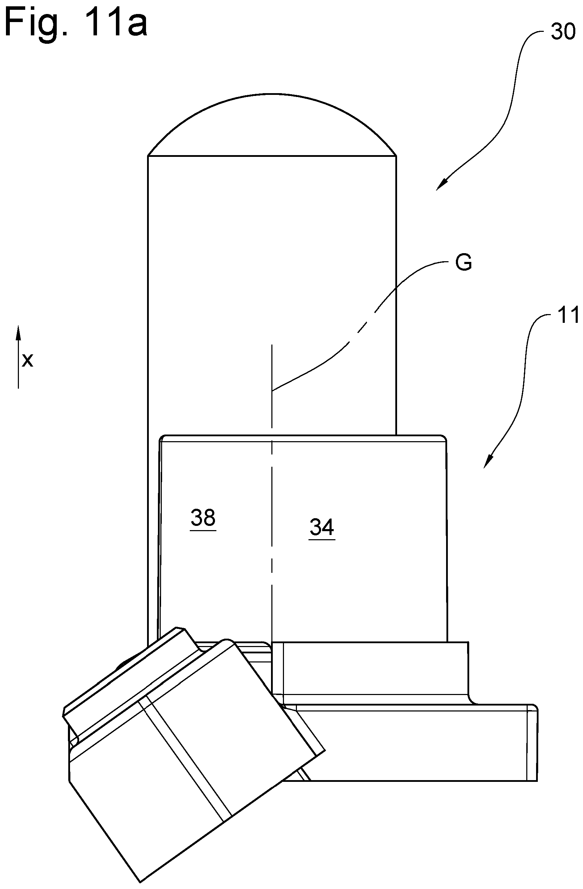

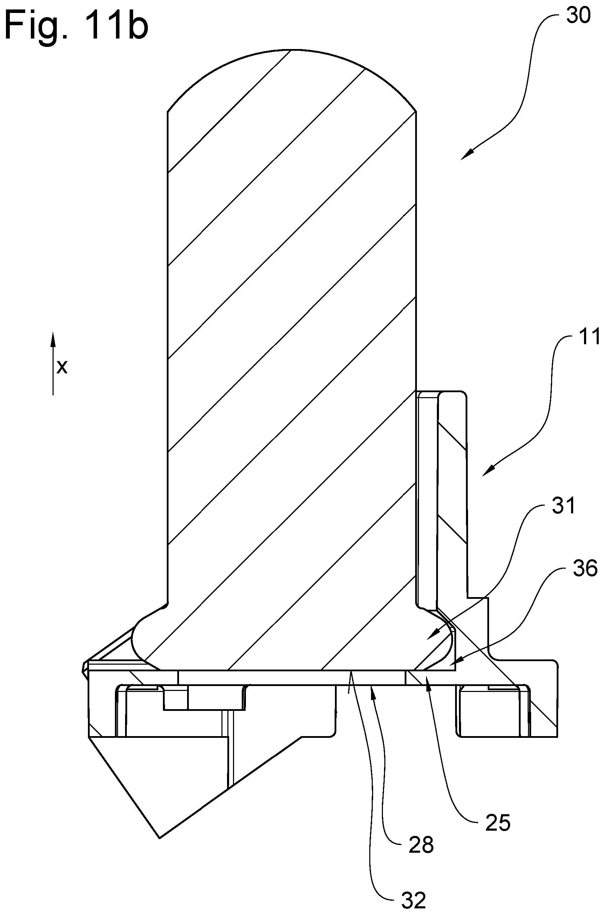

Die Montagelage von Halter 11 und Lichtleitstab 30 ist in den Figuren 11a und 11b dargestellt, wobei die Figur 11b einen Vertikalschnitt der Darstellung nach Figur 11a zeigt. Sichtbar ist, dass der Lichtleitstab 30 mit seiner Lichteintrittsfläche 32 oberhalb der Durchbrechung 28 der Deckwand 25 des Halters 11 angeordnet ist, so dass von der LED 16 (nicht dargestellt) emittiertes Licht in den Lichtleitstab 30 eingespeist werden kann.

Figur 11 zeigt darüber hinaus, wie der Flansch 31 des Lichtleitstabes 30 in den Ringabschnitt 36 eintaucht und dort gegen ein Herausrutschen in Lichtaustrittsrichtung X gesichert ist.

Figur 11a zeigt hingegen die Seitenansicht auf den im Halter 11 montierten Lichtleitstab 30. Hier erkennt man, dass die Zylinderwand 34 den Lichtleitstab 30 über einen Umfangswinkel von etwa 180° umgibt und der Lichtleitstab 30 im Übrigen im Bereich des Umfangsfreischnittes durch den anliegenden Sicherungsflügel 38 im Fixierelement 29 gehalten ist.

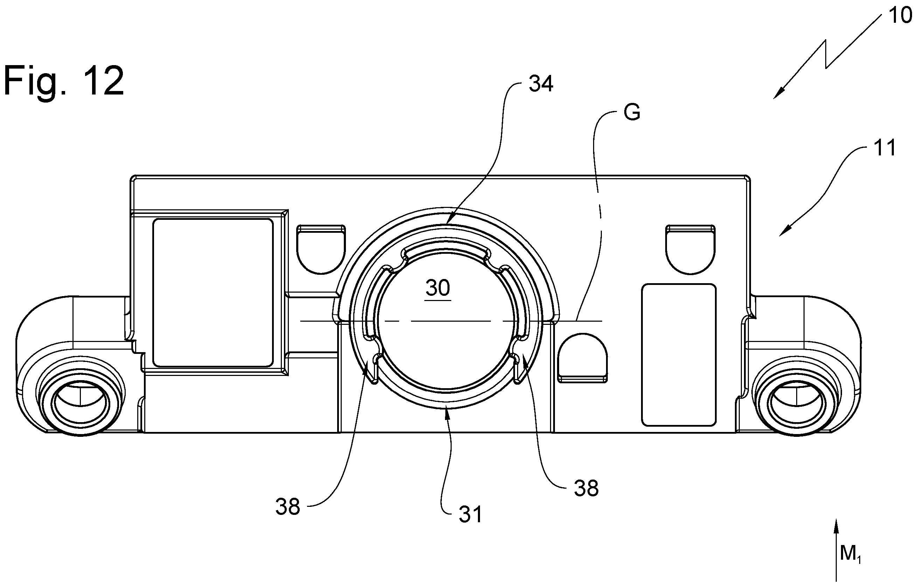

In diesem Zusammenhang wird auch noch einmal auf die Figur 12 verwiesen, welche eine Ansicht von oben auf die Leuchte 10 darstellt. Hier ist der Lichtleitstab 30 in Halter 11 eingesetzt. Anhand der eingezeichneten Grenzlinie G ist die Trennung zwischen Zylinderwand 34 und den Sicherungsflügeln 38 gut erkennbar. Sichtbar ist hier auch, wie die Sicherungsflügel 38 am Außenumfang des Lichtleitstabes 30 anliegen und diesen in Umfangsöffnung der Zylinderwand 34 verengend im Halter 11 gegen ein Herausrutschen entgegen der Montagerichtung M₁ sichern.

Die vorbeschriebenen Ausführungsformen 1 und 2 zeichnen sich unter anderem dadurch aus, dass der Lichtleitstab 30 quer zur Lichtaustrittsrichtung X über eine Umfangsöffnung der Zylinderwand 34 in das Fixierelement 29 eingesetzt wird.

Die nun im Folgenden beschriebenen und als Erfindung beanspruchten Ausführungsformen 3 und 4 haben miteinander gemein, dass der Lichtleitstab 30 von der der Leiterplatte 15 zugewandten Unterseite des Halters 11 in Lichtaustrittsrichtung X durch die Durchbrechung 28 eingeschoben und in das Fixierelement 29 eingesetzt wird.

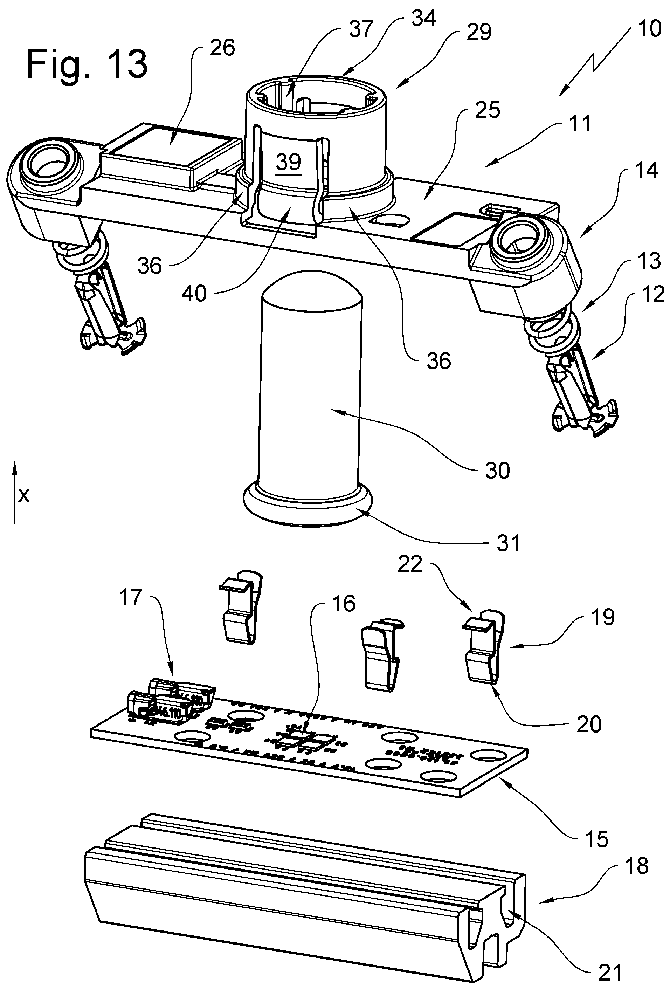

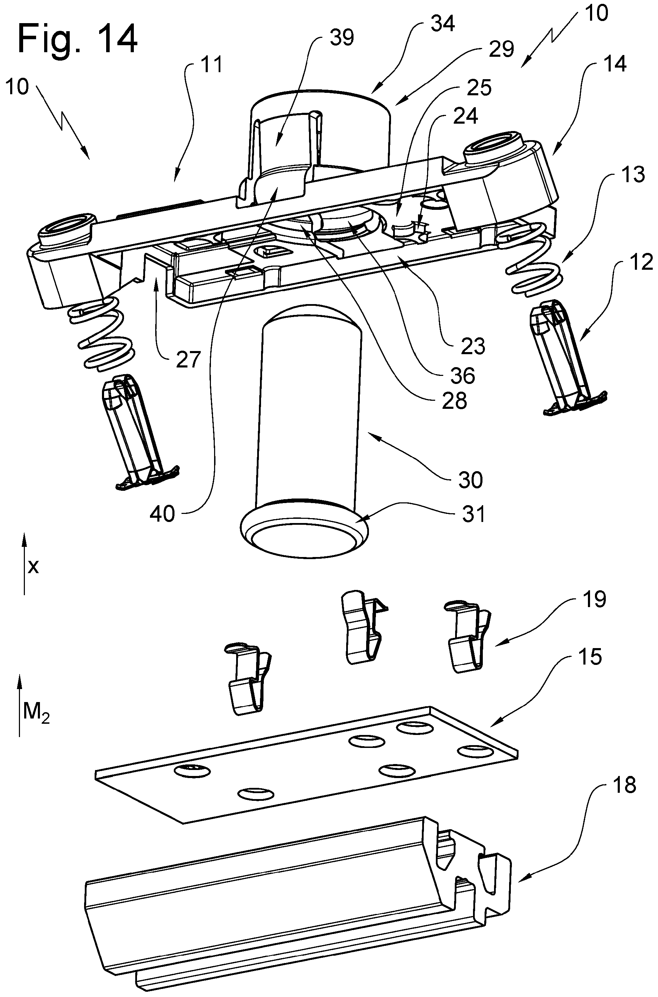

Das Ausführungsbeispiel Nr. 3 wird nunmehr anhand der Figuren 13 bis 16 beschrieben. Die Figuren 13 und 14 zeigen Explosionsansichten analog zu den Figuren 1 und 2 des ersten Ausführungsbeispiels. Auch die Ausführungsform Nr. 3 gleicht in ihrem prinzipiellen Aufbau den vorangegangenen Ausführungsbeispielen 1 und 2, so dass die allgemeine Beschreibung zu den einzelnen Bauteilen und ihrem Zusammenwirken auch für das Ausführungsbeispiel Nr. 3 gilt.

Dem Betrachter fällt beim 3. Ausführungsbeispiel sofort ins Auge, dass das Fixierelement eine vollumfänglich geschlossene Zylinderwand 34 aufweist und so ein seitliches, quer zur Lichtaustrittsrichtung X entlang der Montagerichtung M1 geführtes Einschieben des Lichtleitstabes 30 in das Fixierelement 29 nicht möglich ist.

Auch das Fixierelement 29 des dritten Ausführungsbeispiels der Erfindung bildet an seinem der Deckwand 25 gelegenen Ende eine im Wesentlichen umlaufende Ringnut zur Aufnahme des Flansches 31 des Lichtleitstabes 30 aus. Diese wird gebildet durch zwei einander diametral gegenüberliegende Ringnutabschnitte 36, die voneinander durch zwei ebenfalls diametral einander gegenüberliegende Rastzungen 39 getrennt sind. Anzumerken ist hier, dass für die später beschriebene Sicherungsfunktion lediglich eine Rastzunge 39 ausreichend ist und die hier dargestellten zwei Rastzungen lediglich eine bevorzugte Ausführungsform darstellen.

Jede Rastzunge 39 stellt im Grunde genommen einen Wandabschnitt der Zylinderwand 34 dar, ist also einheitlich stoffschlüssiger Bestandteil der Zylinderwand 34. Hierzu ist ein in etwa U-förmiger Schlitz oder Freischnitt in die Zylinderwand 34 eingebracht, wobei die Rastzunge 39 ein freies, leiterplattennahes Ende aufweist und das leiterplattenferne Ende der Rastzunge 39 an der Zylinderwand 34 angebunden ist. Hierdurch sind die Rastzungen 39 radial nach außen rückstellelastisch beweglich. Jede Rastzunge 39 weist an ihrem freien Ende ihrerseits eine Rastlippe 40 auf.

Wie insbesondere aus Figur 14 ersichtlich ist, verfügt die Durchbrechung 28 der dritten Ausführungsform der Erfindung über einen größeren Durchmesser als die Durchbrechung 28 der Ausführungen 1 und 2. Der freie Durchmesser der Durchbrechung 28 des dritten Ausführungsbeispieles entspricht wenigstens dem Flanschdurchmesser des Lichtleitstabes 30. Der Lichtleitstab 30 wird nunmehr entlang der Montagerichtung M₂ von unten her durch die Durchbrechung 28 hindurch geschoben, bis der Flansch 31 in den Bereich der leiterplattenseitigen, freien Enden der Rastzungen 39 gelangt. Ein Fortsetzen der Einschubbewegung entlang der Montagerichtung M₂, die der Lichtaustrittsrichtung im Wesentlichen entspricht, führt zu einem Auslenken der Rastzungen 39 nach außen, bis die Rastlippen 40 den Flansch 31 hintergreifen.

Hierbei schwenken die Rastzungen 39 in ihre Ausgangslage zurück und halten so den Lichtleitstab entgegen der Montagerichtung M₂ in dem Fixierelement 29.

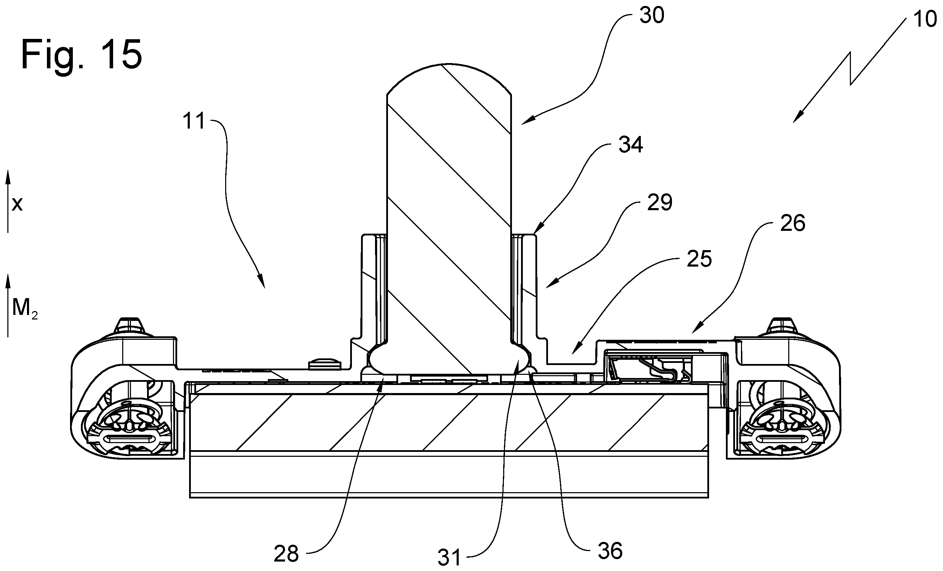

Figur 15 zeigt die Leuchte 10 gemäß drittem Ausführungsbeispiel in einem Vertikalschnitt der Frontalansicht. Dieser ist zunächst zu entnehmen, dass die Durchbrechung 28 über einen Durchmesser verfügt, der den freien Durchtritt des Flansches 31 bis in das Fixierelement 29 gestattet. Darüber hinaus ist zu sehen, wie der Flansch 31 dann in dem Ringnutabschnitt 36 des Fixierelementes 29 einsitzt, so dass eine fortgesetzte Bewegung entlang der Montagerichtung M₂ ausgeschlossen ist und der Lichtleitstab 30 in Lichtaustrittsrichtung X im Fixierelement 29 gesichert ist.

Figur 4 zeigt eine Schnittansicht durch die Leuchte 10 entlang einer Vertikalebene in Form einer Seitenansicht. Dieser lässt sich entnehmen, dass die Rastzungen 39 an ihrem freien, der Leiterplatte 15 nahem Ende mit Rastlippen 40 versehen sind, die den Flansch 31 umgreifen und so ein Herausrutschen des Lichtleitstabes 30 entgegen der Montagerichtung M₂ aus dem Fixierelement 29 sicher verhindern. Zudem gewährleisten die Rastlippen 40 einen Mindestabstand zwischen Leiterplatte 15 und der Lichteintrittsfläche 32 des Lichtleitstabes 30, so dass dieser mit den Elektronikbauteilen der Leiterplatte 15 nicht in Berührung kommt. Das Einhalten des Abstandes zwischen Lichteintrittsfläche 32 des Lichtleitstabes 30 und der Platinenoberfläche kann auch durch Distanzelemente sichergestellt werden, wie beispielsweise einen zwischen Leiterplatte 15 und Lichteintrittsfläche 32 befindlichen Elastomerring oder auf der Leiterplatte 15 angeordnete Distanzstücke.

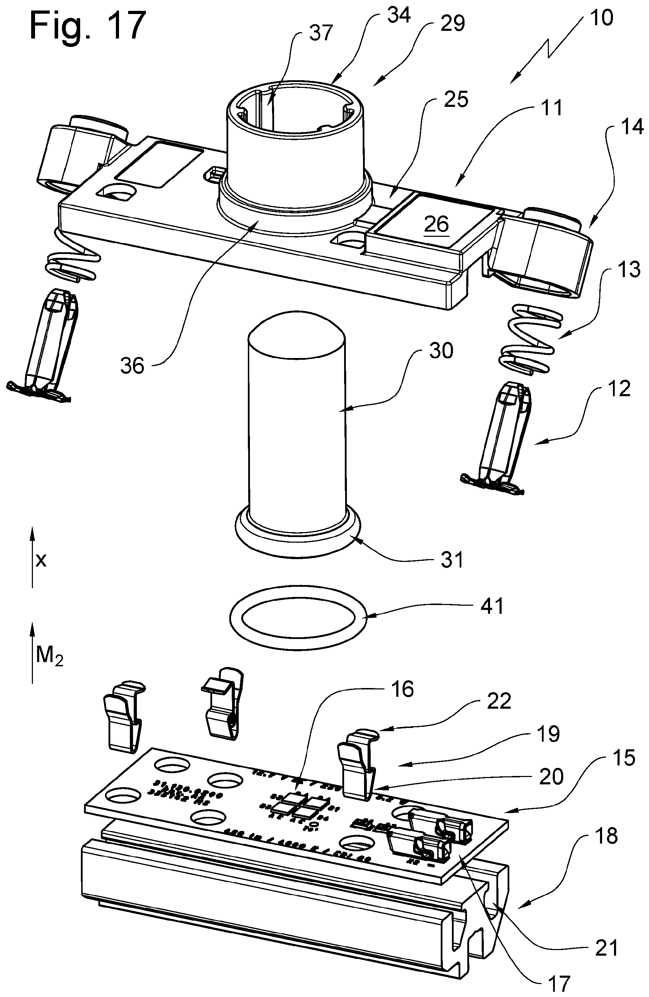

Die Figuren 17 bis 20 zeigen sodann eine vierte Ausführungsform der Erfindung. Auch bei dieser wird der Lichtleitstab 30 entlang der Montagerichtung M₂ von unten her in den Halter 11 eingeschoben.

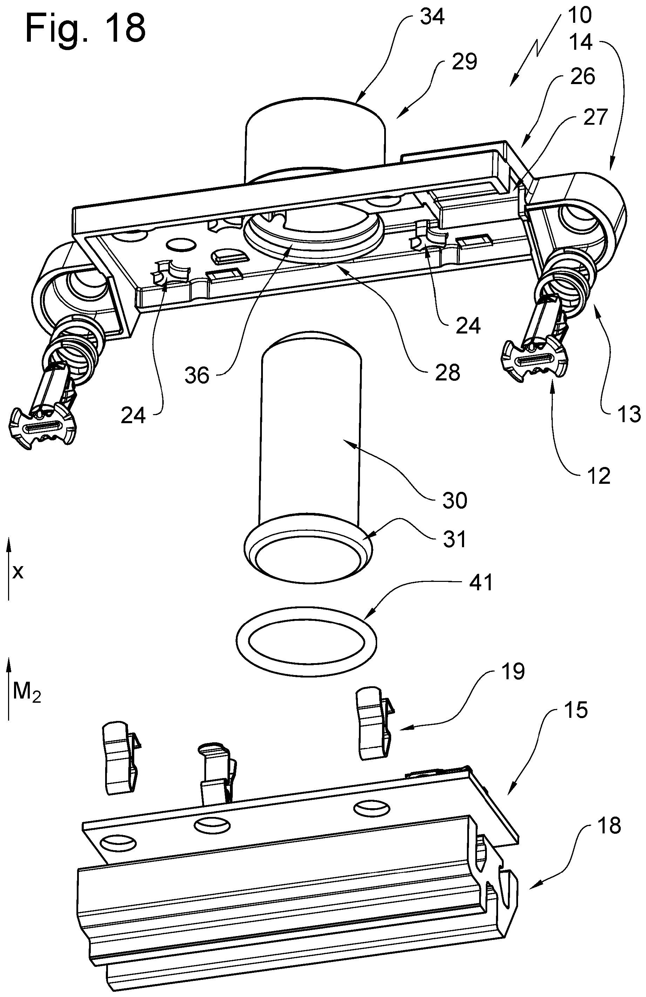

Zunächst sei auf die Figuren 17 und 18 hingewiesen, die analog zu den Figuren 1 und 2 des ersten Ausführungsbeispieles aufgebaut sind und die Einzelteile der erfindungsgemäßen Leuchte 10 nach Ausführungsbeispiel 4 zeigen. Auch hier sind die wesentlichen Strukturen zwischen dem ersten und dem vierten Ausführungsbeispiel gleichartig, so dass hinsichtlich der allgemeinen Eigenschaften und Zusammenhänge auf die Ausführungen zum ersten Ausführungsbeispiel und dort insbesondere zu den Figuren 1 und 2 verwiesen wird.

Der wesentliche Unterschied zu den vorherigen Ausführungsbeispielen besteht auch hier in der Ausgestaltung der Zylinderwand 34. Diese umgibt die durch Durchbrechung 28 vollständig. Auch ist die Zylinderwand 34 des vierten Ausführungsbeispieles - im Gegensatz zu den vorherigen Ausführungsbeispielen - vollständig geschlossen ausgeführt. Es existiert somit keinerlei Umfangsöffnung oder Freischnitt. Der Lichtleitstab 30 ist also bei dieser Ausführungsform, wie es insbesondere anhand von Figur 18 ersichtlich ist, ausschließlich durch Einschieben des Lichtleitstabes in Einführrichtung M₂, bzw. entlang der Lichtaustrittsrichtung X, durch die Durchbrechung 28 in das Fixierelement 29 bzw. den durch die Zylinderwand 34 gebildeten Hülsenkörper einzuführen. Hierzu ist auch bei dieser Ausführungsform die Durchbrechung 28 in ihrem Durchmesser derart bemessen, dass der Lichtleitstab 30 nebst des Flansches 31 hindurchtreten kann.

Als zusätzliches Bauteil ist bei der vierten Ausführungsform der Erfindung ein Distanzring 41 vorgesehen.

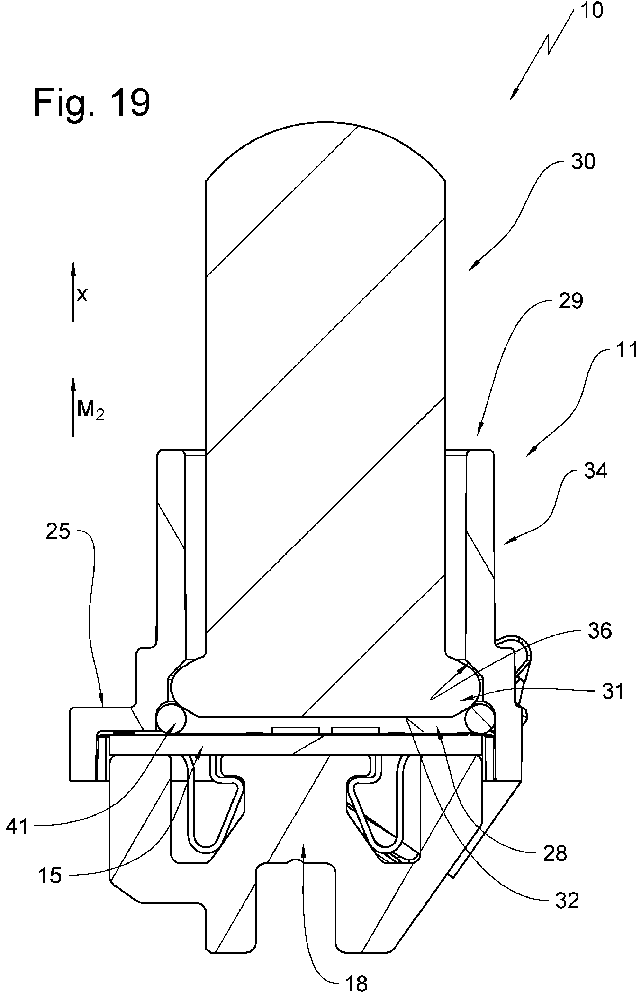

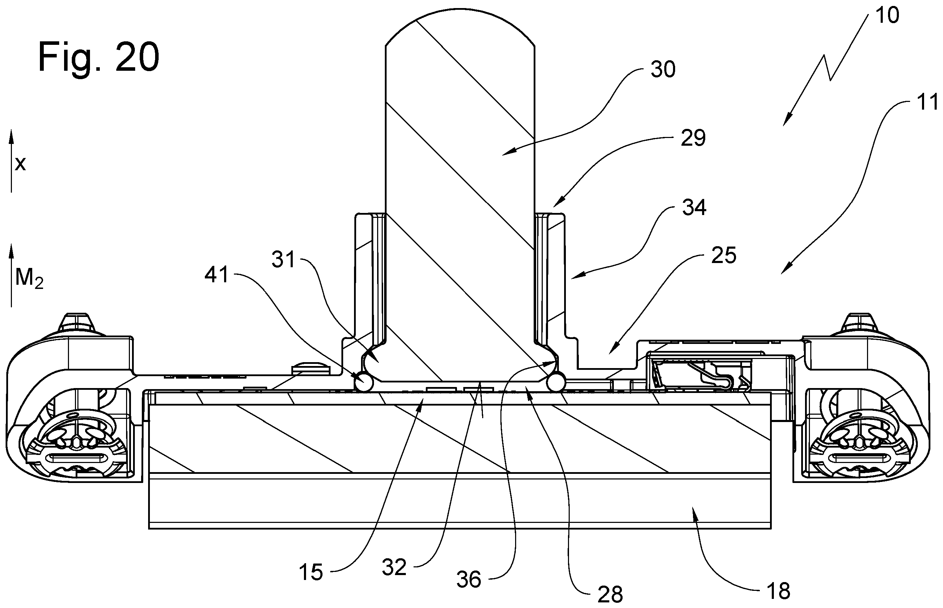

Die genaue Festlegung des Lichtleitstabes 30 im Halter 11 wird nunmehr anhand zweier Schnittdarstellungen der Leuchte 10 in den Figuren 19 und 20 näher erläutert. Dabei handelt es sich bei Figur 19 um einen Vertikalschnitt der Leuchte 10 in Seitenansicht. Figur 20 zeigt einen Vertikalschnitt der Frontalansicht der Leuchte 10.

Der Lichtleitstab 30 ist hier entlang der Montagerichtung M₂ bzw. entlang der Lichtaustrittsrichtung X in den Halter 11 eingesetzt worden. Hierbei durchtritt der Lichtleitstab 30 die Durchbrechung 28 der Deckwand 25 des Halters 11. Der umlaufende Flansch 31 sitzt in der vollständig umlaufenden Ringnut 36 der Zylinderwand 34 ein, so dass die Einschubbewegung des Lichtleitstabes 30 entlang der Montagerichtung M₂ ein Ende findet. Ein Herausrutschen des Lichtleitstabes 30 in Lichtaustrittsrichtung X aus dem Fixierelement 29 heraus ist somit nicht möglich.

Nach Einsetzen des Lichtleitstabes wird der Distanzring 41 unter den Flansch 31 gelegt, woraufhin dann die Leiterplatte 15 samt Gegenlager 18 am Halter montiert wird. Der Distanzring 41 kommt zwischen dem Flansch 31 und der Leiterplatte 15 zur Anlage und verhindert so ein Rückrutschen des Lichtleitstabes 30 entgegen der Montagerichtung M₂ bis auf die Leiterplatte 15. Auf diese Weise werden die auf der Leiterplatte 15 befindlichen Elektronikbauteile, insbesondere die LED 16, vor einer Berührung mit dem Lichtleitstab 30 geschützt.

Bevorzugt ist der Distanzring 41 ein Elastomerbauteil, welches beim Ansetzen der Leiterplatte 15 an den Halter 11 zumindest geringfügig komprimiert wird. Auf diese Weise entstehen Andruckkräfte, die auf den Lichtleitstab 30 in Montagerichtung M₂ wirken und den Lichtleitstab 30 so sicher in der Ringnut 36 halten.

Zusammenfassend stellt die Erfindung eine Gargeräteleuchte vor. Diese gewährleistet einen formschlüssigen und somit sehr sicheren Sitz des Lichtleitstabes 30. Dieser Formschluss wird abstrakt gesprochen durch einen Umfangsvorsprung des Lichtleitstabes 30 erreicht, wobei der Umfangsvorsprung in einer entsprechenden Ausnehmung des Halters 11 bzw. des Fixierelementes 29 des Halters 11 einsitzt. Besonders bevorzugt ist es, wenn der Umfangsvorsprung als Flansch 31 ausgebildet ist und dieser Flansch 31 sich an demjenigen Ende des Lichtleitstabes 30 befindet, welches die Lichteintrittsfläche 32 ausbildet.

In vier konkret und detailliert beschriebenen Ausführungsbeispielen sind verschiedene Möglichkeiten gezeigt, den Lichtleitstab 30 im Fixierelement 29 zu montieren und zu sichern.

Anzumerken ist noch, dass die Möglichkeit besteht, eine hinsichtlich der Axialrotation des Lichtleitstabes 30 definierte Ausrichtung des Lichtleitstabes 30 relativ zum Halter 11 zu gewährleisten. Hierzu lassen sich Freischnitte in den Flansch 31 einbringen, in welche in der Ringnut 36 bzw. den Ringnutabschnitten 36 befindliche Zapfen eingreifen. Hierdurch wird eine Rotation des Lichtleitstabes 30 um seine Längsachse herum sicher vermieden. Über die Anzahl der Freischnitte im Flansch 31 und ihre Lage ist es darüber hinaus möglich, bestimmte Lichtleitstäbe 30 für entsprechend ausgebildete Halter 11 zu kodieren, so dass bestimmten Haltern 11 definierte Lichtleitstäbe 30 zugeordnet werden können. Neben dem Verdrehschutz kann so auch eine Kodierfunktion erreicht werden. Neben dem vorteilhaften Formschluss zur Festlegung des Lichtleitstabes 30 im Halter 11 gewährleistet der Umfangsvorsprung am Lichtleitstab 30, insbesondere der Flansch 31, den Lichtleitstab 30 in seinem vollen Querschnitt für die Lichtleitung zu nutzen. Lichtverluste durch Umfangseinschnitte im Lichtleitstab 30 werden somit sicher vermieden.

### BEZUGSZEICHENLISTE

- 10: Leuchte
- 11: Halter
- 12: Steckbolzen
- 13: Schraubenfeder
- 14: Bolzenaufnahme
- 15: Leiterplatte
- 16: LED
- 17: Anschlussklemme
- 18: Gegenlager
- 19: Rastfederelemente
- 20: Fuß
- 21: Befestigungsnut
- 22: Haltearm
- 23: Leiterplattenaufnahme
- 24: Distanzstück
- 25: Deckwand
- 26: Aufnahmekuppel
- 27: Leitereinführdurchbruch
- 28: Durchbrechung
- 29: Fixierelement
- 30: Lichtleitstab
- 31: Flansch
- 32: Lichteintrittsfläche
- 33: Sicherungsring
- 34: Zylinderwand
- 35: Sicherungsringnut
- 36: Ringnutabschnitt
- 37: Zentriersteg
- 38: Sicherungsflügel
- 39: Rastzunge
- 40: Rastlippen
- 41: Distanzring

- G: Grenzlinie
- X: Lichtaustrittsrichtung
- M₁: Montagerichtung
- M₂: Montagerichtung

## Patentansprüche

1. Gargeräteleuchte (10),
- mit einer Lichtquelle, die von einer Leiterplatte (15) mit darauf angeordneter LED (16) gebildet ist, welche Licht in Lichtaustrittsrichtung (X) emittiert,
- mit einem Lichtleitstab (30), der eine Lichteintrittsfläche (32) für das von der LED (16) emittierte Licht aufweist,
- mit einem Halter (11), der auf einer Unterseite eine Leiterplattenaufnahme (23) aufweist und auf einer der Unterseite gegenüberliegenden Oberseite mit einem Fixierelement (29) zur Aufnahme des Lichtleitstabes (30) versehen ist,
- mit einer Durchbrechung (28) des Halters (11) im Bereich des Fixierelementes (29), durch welche das emittierte Licht von der auf der Unterseite angeordneten LED (16) zum im oberseitig angeordneten Lichtleitstab (30) gelangt,
wobei
- der Lichtleitstab (30) in einer Radialebene einen materialeinheitlichstoffschlüssigen Umfangsvorsprung aufweist,
- der Lichtleitstab (30) mittels des Umfangsvorsprungs im Fixierelement (29) des Halters (11) formschlüssig festgelegt ist, **dadurch gekennzeichnet, dass**
- der Umfangsvorsprung ein im Wesentlichen umlaufender Flansch (31) am an der Lichteintrittsfläche des Lichtleitstabes (30) gelegenen Ende des Lichtleitstabes (30) ist,
- eine Zylinderwand (34) des Fixierelementes (29) vollumfänglich geschlossen ist, wobei
- die innenumfängliche Ausnehmung, insbesondere in Form wenigstens eines Ringnutabschnittes (36) an dem dem Halter nahen Ende der Zylinderwand (34) ausgebildet ist,
- der Lichtleitstab (30) in Lichtaustrittsrichtung (X) durch die Durchbrechung (28) hindurch in das Fixierelement (29) eingesetzt ist.

2. Gargeräteleuchte nach Anspruch 1, **dadurch gekennzeichnet, dass** aus einem Wandabschnitt eine Rastzunge (39) freigeschnitten ist, deren durchbrechungsnahes Ende rückstellelastisch radial ausfedert und in welcher der Flansch (31) des Lichtleitstabes (30) verrastet.

3. Gargeräteleuchte nach Anspruch 1, **dadurch gekennzeichnet, dass** die an dem Halter montierte Leiterplatte ein Rückrutschen des Lichtleitstabes entgegen seiner Montagerichtung verhindert und auf diese Weise die Leiterplatte als Sicherungselement für den Lichtleitstab dient.

4. Gargeräteleuchte nach Anspruch 2, **dadurch gekennzeichnet, dass** ein Distanzelement zwischen Leiterplatte und Lichtleitstab eingefügt ist, um eine direkte Kontaktierung zwischen Lichtleitstab und Leiterplatte zu verhindern und/oder Fertigungstoleranzen auszugleichen und/oder einen festen Sitz des Lichtleitstabes insbesondere in Lichtaustrittsrichtung im Fixierelement zu gewährleisten.

5. Gargeräteleuchte nach Anspruch 4, **dadurch gekennzeichnet, dass** das Distanzelement ein Elastomerring ist, welcher nach der Montage der Leiterplatte zumindest minimal gestaucht ist und so eine in Lichtaustrittsrichtung wirkende Druckkraft auf den im Fixierelement gehaltenen Lichtleitstab aufbringt.

6. Gargeräteleuchte nach Anspruch 4, **dadurch gekennzeichnet, dass** die Leiterplatte bei ihrer Konfektionierung mit Distanzelementen versehen ist, die bevorzugt elastische Eigenschaften haben.

## Claims

1. Cooking appliance light (10),
- comprising a light source formed by a printed circuit board (15) with an LED (16) arranged thereon, which emits light in the light exit direction (X),
- comprising a light guide rod (30) having a light entrance surface (32) for the light emitted by the LED (16),
- with a holder (11) which has a printed circuit board receptacle (23) on a lower side and is provided on an upper side opposite the lower side with a fixing element (29) for receiving the light guide rod (30),
- with an opening (28) in the holder (11) in the region of the fixing element (29), through which the emitted light from the LED (16) arranged on the underside reaches the light guide rod (30) arranged on the upper side,
whereby
- the light guide rod (30) has a circumferential projection in a radial plane, made of the same material and with a material-to-material bond,
- the light guide rod (30) is positively secured in the fixing element (29) of the holder (11) by means of the circumferential projection,
**characterised in that**
- the circumferential projection is a substantially circumferential flange (31) at the end of the light guide rod (30) located at the light-entry surface of the light guide rod (30),
- the cylinder wall (34) of the fixing element (29) is closed along its entire circumference, wherein
- the inner circumferential recess, in particular in the form of at least one annular groove section (36), is formed at the end of the cylindrical wall (34) close to the holder,
- the light guide rod (30) is inserted into the fixing element (29) through the opening (28) in the direction of light exit (X).

2. A cooking appliance light as per claim 1, **characterised in that** a latching tongue (39) is cut out of a section of the wall, the end of which, close to the cut-out, springs back radially under the action of a return spring, and into which the flange (31) of the light guide rod (30) engages.

3. A cooking appliance light as claimed in claim 1, **characterised in that** the printed circuit board mounted on the bracket prevents the light guide rod from sliding backwards against its direction of mounting, and in this way the printed circuit board serves as a retaining element for the light guide rod.

4. A cooking appliance light as per claim 2, **characterised in that** a spacer element is inserted between the printed circuit board and the light guide rod in order to prevent direct contact between the light guide rod and the printed circuit board and/or to compensate for manufacturing tolerances and/or to ensure that the light guide rod is securely seated in the fixing element, particularly in the direction of light emission.

5. A cooking appliance light as per claim 4, **characterised in that** the spacer element is an elastomer ring which, after the circuit board has been fitted, is compressed at least slightly and thus exerts a compressive force in the direction of light emission on the light guide held in the fixing element.

6. A cooking appliance light as per claim 4, **characterised in that**, during assembly, the printed circuit board is fitted with spacer elements which preferably have elastic properties.

## Revendications

1. Lampe pour appareil de cuisson (10),
- comprenant une source lumineuse formée d'une carte de circuit imprimé (15) sur laquelle est disposée une LED (16) qui émet de la lumière dans la direction de sortie de la lumière (X),
- comprenant une barre de guidage de lumière (30) qui présente une surface d'entrée de lumière (32) pour la lumière émise par la LED (16),
- comportant un support (11) qui présente, sur une face inférieure, un logement pour carte de circuit imprimé (23) et qui est muni, sur une face supérieure opposée à la face inférieure, d'un élément de fixation (29) destiné à recevoir la barre de guidage de lumière (30),
- avec une ouverture (28) dans le support (11) au niveau de l'élément de fixation (29), à travers laquelle la lumière émise par la LED (16) disposée sur la face inférieure parvient jusqu'à la tige de guidage de lumière (30) disposée sur la face supérieure,
dans lequel
- la barre de guidage de lumière (30) présente, dans un plan radial, une saillie périphérique en un matériau homogène et par adhérence,
- la barre de guidage de lumière (30) est fixée par complémentarité de forme dans l'élément de fixation (29) du support (11) au moyen de la saillie périphérique,
**caractérisé en ce que**
- la saillie périphérique est une bride (31) s'étendant sensiblement sur tout le pourtour, située à l'extrémité de la tige de guidage de lumière (30) qui est adjacente à la surface d'entrée de la lumière de ladite tige (30),
- la paroi cylindrique (34) de l'élément de fixation (29) est fermée sur tout son pourtour,
- l'évidement périphérique intérieur est formé, en particulier sous la forme d'au moins une section de rainure annulaire (36) à l'extrémité de la paroi cylindrique (34) proche du support,
- la tige de guidage de lumière (30) est insérée dans l'élément de fixation (29) dans la direction de sortie de la lumière (X) à travers l'ouverture (28).

2. Lampe pour appareil de cuisson selon la revendication 1, **caractérisée en ce qu'**une languette d'encliquetage (39) est découpée dans une partie de la paroi, dont l'extrémité proche de la découpe s'écarte radialement sous l'effet d'une force de rappel élastique et dans laquelle s'enclenche la bride (31) de la tige conductrice de lumière (30).

3. Lampe pour appareil de cuisson selon la revendication 1, **caractérisée en ce que** la carte de circuit imprimé montée sur le support empêche la barre de guidage de lumière de glisser vers l'arrière dans le sens opposé à son sens de montage et sert ainsi d'élément de fixation pour la barre de guidage de lumière.

4. Lampe pour appareil de cuisson selon la revendication 2, **caractérisée en ce qu'**un élément d'écartement est intercalé entre la carte de circuit imprimé et la barre de guidage de lumière afin d'empêcher tout contact direct entre la barre de guidage de lumière et la carte de circuit imprimé et/ou de compenser les tolérances de fabrication et/ou de garantir un maintien ferme de la barre de guidage de lumière dans l'élément de fixation, en particulier dans le sens de sortie de la lumière.

5. Lampe pour appareil de cuisson selon la revendication 4, **caractérisée en ce que** l'élément d'écartement est une bague en élastomère qui, après le montage de la carte de circuit imprimé, est au moins légèrement comprimée et exerce ainsi une force de pression, agissant dans la direction de sortie de la lumière, sur la tige conductrice de lumière maintenue dans l'élément de fixation.

6. Lampe pour appareil de cuisson selon la revendication 4, **caractérisée en ce que** la carte de circuit imprimé est munie, lors de son assemblage, d'éléments d'écartement qui présentent de préférence des propriétés élastiques.
